# EUROPÄISCHE PATENTANMELDUNG

(11) **EP 4 819 651 A1**
(43) Veröffentlichungstag der Anmeldung: **07.10.2026**
(21) Anmeldenummer: 26167951.8
(22) Anmeldetag: 26.03.2026
(51) Int. Cl.: H04W 4/44

(54) **VERFAHREN ZUR SPIEGELUNG EINER ANZEIGE EINER FAHRZEUG-ANZEIGEEINRICHTUNG, TELEMATIKMODUL, SCHWERLAST-TRANSPORTFAHRZEUG UND SYSTEM**

(30) Priorität: 01.04.2025 DE 102025112646
(71) Anmelder: Scheuerle Fahrzeugfabrik GmbH, 74629 Pfedelbach (DE)
(72) Erfinder: Schmidt, Dominik, 74629 Pfedelbach (DE); Dudek, Tobias, 74629 Pfedelbach (DE)
(74) Vertreter: Ullrich & Naumann PartG mbB

(57) **Zusammenfassung**

Ein Verfahren zur Spiegelung einer Anzeige (7) einer Fahrzeug-Anzeigeeinrichtung (4) eines Schwerlast-Transportfahrzeugs (2), beispielsweise eines Industriehubtransporters, eines Schiffshubtransporters und/oder eines selbstangetriebenen modularen Transporters, auf ein externes Endgerät (14), beispielsweise auf ein mobiles Endgerät (14) oder auf einen Desktop-Computer, wobei die Fahrzeug-Anzeigeeinrichtung (4) über eine Fahrzeug-Datenverbindung (6) mit dem Schwerlast-Transportfahrzeug (2) verbunden ist und über eine Anzeige-Datenverbindung (9) mit einem Telematikmodul (3) verbunden ist, wobei über das Telematikmodul (3) eine erste Verbindung (11), vorzugsweise eine erste TCP-Verbindung, zu einem verteilten Rechnernetzwerk (12), insbesondere einer Cloud, bereitgestellt wird, wobei Anzeigedaten der Fahrzeug-Anzeigeeinrichtung (4) über die erste Verbindung (11) an das verteilte Rechnernetzwerk (12) übermittelt werden, wobei die Anzeigedaten über eine zweite Verbindung (13), vorzugsweise eine zweite TCP-Verbindung, von dem verteilten Rechnernetzwerk (12) an das externe Endgerät (14) übermittelt und von diesem angezeigt werden, und wobei die erste Verbindung (11) und die zweite Verbindung (13) voneinander separat sind. Des Weiteren sind ein Telematikmodul (3), ein Schwerlast-Transportfahrzeug (2) und ein System (1) beschrieben.

## Beschreibung

Die Erfindung betrifft ein Verfahren zur Spiegelung einer Anzeige einer Fahrzeug-Anzeigeeinrichtung eines Schwerlast-Transportfahrzeugs, beispielsweise eines Industriehubtransporters, eines Schiffshubtransporters und/oder eines selbstangetriebenen modularen Transporters, auf ein externes Endgerät, beispielsweise auf ein mobiles Endgerät oder auf einen Desktop-Computer.

Des Weiteren betrifft die Erfindung ein Telematikmodul für ein Schwerlast-Transportfahrzeug.

Weiterhin betrifft die Erfindung ein Schwerlast-Transportfahrzeug, insbesondere zur Durchführung eines Verfahrens nach einem der Ansprüche 1 bis 9.

Des Weiteren betrifft die Erfindung ein System mit einem Schwerlast-Transportfahrzeug nach einem der Ansprüche 12 bis 14 und einem externen Endgerät.

Aus der Praxis sind Transportfahrzeuge, beispielsweise sog. selbstangetriebenen Transportfahrzeuge und selbstangetriebene modulare Transporter ("Self-Propelled Modular Transporter" SPMT) vorbekannt, welche zum Transport von schweren Lasten genutzt werden, beispielsweise um Industrieanlagen, Schiffe, Schiffssektionen, Turbinen etc. zu transportieren. Entsprechende Transportfahrzeuge können ein Fahrwerk mit einer Ladefläche und hintereinander angeordneten Radanordnungen aufweisen, die über ein oder mehrere Antriebseinheiten angetrieben werden, wobei die Antriebseinheiten integraler Bestandteil des Transportfahrzeugs sein können oder als Antriebsmodul, sog. Power Pack Unit (PPU) ausgebildet sein können. Ähnlich aufgebaut sind sog. Schiffshubtransporter (SHT) und Industriehubtransporter (IHT).

Bei den in Rede stehenden Schwerlast-Transportfahrzeugen besteht das Bedürfnis, dass ein Anwender auf einfache Weise Informationen über einzelne seiner Schwerlast-Transportfahrzeuge bzw. über seine bestehende Fahrzeugflotte erhält. Diese Informationen können beispielsweise den Standort und den Zustand der einzelnen Schwerlast-Transportfahrzeug betreffen.

Der vorliegenden Erfindung liegt daher die Aufgabe zugrunde, ein Verfahren anzugeben, welches mit einfachen Mitteln eine Bereitstellung von Informationen über das Schwerlast-Transportfahrzeug ermöglicht. Des Weiteren sollen ein Telematikmodul, ein Schwerlast-Transportfahrzeug und ein System angegebene werden, welche mit konstruktiv einfachen Mitteln eine Bereitstellung von Informationen über das Schwerlast-Transportfahrzeug ermöglichen.

Erfindungsgemäß wird die voranstehende Aufgabe in Bezug auf das Verfahren durch die Merkmale des Anspruches 1 gelöst. Damit ist ein Verfahren zur Spiegelung einer Anzeige einer Fahrzeug-Anzeigeeinrichtung eines Schwerlast-Transportfahrzeugs, beispielsweise eines Industriehubtransporters, eines Schiffshubtransporters und/oder eines selbstangetriebenen modularen Transporters, auf ein externes Endgerät, beispielsweise auf ein mobiles Endgerät oder auf einen Desktop-Computer, angegeben. Dabei ist die Fahrzeug-Anzeigeeinrichtung über eine Fahrzeug-Datenverbindung mit dem Schwerlast-Transportfahrzeug verbunden und über eine Anzeige-Datenverbindung mit einem Telematikmodul verbunden, wobei über das Telematikmodul eine erste Verbindung, vorzugsweise eine erste TCP-Verbindung, zu einem verteilten Rechnernetzwerk, insbesondere einer Cloud, bereitgestellt wird, wobei Anzeigedaten der Fahrzeug-Anzeigeeinrichtung über die erste Verbindung an das verteilte Rechnernetzwerk übermittelt werden, wobei die Anzeigedaten über eine zweite Verbindung, vorzugsweise eine zweite TCP-Verbindung, von dem verteilten Rechnernetzwerk an das externe Endgerät übermittelt und von diesem angezeigt werden, und wobei die erste Verbindung und die zweite Verbindung voneinander separat sind.

In Bezug auf das Telematikmodul wird die voranstehende Aufgabe durch Anspruch 10 gelöst. Damit ist ein Telematikmodul für ein Schwerlast-Transportfahrzeug, insbesondere zur Durchführung eines Verfahrens nach einem der Ansprüche 1 bis 9, beansprucht. Das Telematikmodul ist über eine Anzeige-Datenverbindung mit einer Fahrzeug-Anzeigeeinrichtung verbindbar und dazu ausgebildet, eine erste Verbindung, vorzugsweise eine erste TCP-Verbindung, zu einem verteilten Rechnernetzwerk bereitzustellen und Anzeigedaten der Fahrzeug-Anzeigeeinrichtung an das verteilte Rechnernetzwerk zu übermitteln.

In Bezug auf das Schwerlast-Transportfahrzeug wird die voranstehende Aufgabe durch Anspruch 12 gelöst. Damit ist ein Schwerlast-Transportfahrzeug, insbesondere zur Durchführung eines Verfahrens nach einem der Ansprüche 1 bis 9, beansprucht, mit einer Fahrzeug-Anzeigeeinrichtung und einem Telematikmodul nach einem der Ansprüche 10 oder 11.

In Bezug auf das System wird die voranstehende Aufgabe durch Anspruch 15 gelöst. Damit ist ein System mit einem Schwerlast-Transportfahrzeug nach einem der Ansprüche 12 bis 14 und einem externen Endgerät beansprucht, wobei das System zur Ausführung eines Verfahrens nach einem der Ansprüche 1 bis 9 ausgebildet ist.

In erfindungsgemäßer Weise ist erkannt worden, dass die Spiegelung der Anzeige der Fahrzeug-Anzeigeeinrichtung in verblüffend einfacher Weise erfolgen kann, ohne dass das externe Endgerät und das Schwerlast-Transportfahrzeug bzw. die Fahrzeug-Anzeigeeinrichtung mit dem gleichen VPN-Netzwerk verbunden sein müssen. Hierzu werden die Anzeigedaten über eine erste Verbindung an ein verteiltes Rechnernetz übermittelt. In vorteilhafter Weise handelt es sich bei der ersten Verbindung um eine, vorzugsweise verschlüsselte, TCP-Verbindung, die eine Verbindung zwischen den Kommunikationsendpunkten im Telematikmodul und in dem verteilten Rechnernetz bereitstellt. Dadurch wird eine stabile, bidirektionale Verbindung realisiert. Bei dem verteilten Rechnernetz kann es sich insbesondere um eine Cloud handeln. Dies ermöglicht es, dass über eine von der ersten Verbindung unabhängige bzw. separate zweite Verbindung die Anzeigedaten an das externe Endgerät übermittelt werden. Dies hat den Vorteil, dass die Sicherheit des externen Endgeräts bzw. des Netzwerkes, beispielsweise des Firmennetzwerkes, in dem sich das externe Endgerät befinde, gegeben ist und die Funktionalität der Spiegelung der Anzeige unabhängig von der individuellen IT-Sicherheit dieses Netzwerkes genutzt werden kann. Die zweite Verbindung kann ebenfalls als TCP-Verbindung, vorzugsweise als verschlüsselte TCP-Verbindung, realisiert sein, wobei die voranstehend beschriebenen Vorteile erzielt werden. In vorteilhafter Weise könnte durch die erste Verbindung und die zweite Verbindung insgesamt eine getunnelte Verbindung zwischen dem Telematikmodul und dem externen Endgerät bereitgestellt werden. Die erfindungsgemäße Lehre ermöglicht es somit, dass das verteilte Rechnernetz lediglich als Vermittler fungiert, so dass aufgrund der voneinander separaten ersten und zweiten Verbindung keine Point-to-Point Verbindung zwischen Telematikmodul und externem Endgerät (von dem aus zugegriffen wird) realisiert wird. Insgesamt wird damit eine hohe Sicherheit der Displayspiegelung erzielt. Es ist denkbar, durch die erfindungsgemäße Lehre ein Fuhrpark- bzw. Flottenmanagement zu ermöglichen. Beispielsweise könnten der Standort des Schwerlast-Transportfahrzeugs und/oder andere Fahrzeugdaten an das externe Endgerät übermittelt werden, so dass Standzeiten verringert und Reparaturen und Wartungen zumindest teilweise vermieden werden könnten. Des Weiteren ist denkbar, dass eine Ferndiagnose durch die Spiegelung der Anzeige durchgeführt werden könnte.

In weiter erfindungsgemäßer Weise ist erkannt worden, dass das erfindungsgemäße Verfahren in besonders einfacher Weise ausführbar ist, wenn ein Telematikmodul über eine Anzeige-Datenverbindung mit einer Fahrzeug-Anzeigeeinrichtung verbindbar ist und dazu ausgebildet ist, eine erste Verbindung, vorzugsweise eine erste TCP-Verbindung, zu einem verteilten Rechnernetzwerk bereitzustellen und Anzeigedaten der Fahrzeug-Anzeigeeinrichtung an das verteilte Rechnernetzwerk zu übermitteln. Dabei ist es denkbar, dass ein solches Telematikmodul ggf. mit einer bereits bestehenden Anzeigeeinrichtung kompatibel ist und somit nachgerüstet werden kann. Es ist denkbar, dass das Telematikmodul und die Fahrzeug-Anzeigeeinrichtung als eine gemeinsame Komponente ausgebildet sein könnten, beispielsweise könnte das Telematikmodul in die Fahrzeug-Anzeigeeinrichtung integriert sein, was auch die Anzeige-Datenverbindung umfasst. Alternativ könnten das Telematikmodul und die Fahrzeug-Anzeigeeirichtung als voneinander unabhängige Komponenten ausgebildet sein.

Das im Rahmen dieser Offenbarung, insbesondere in der Beschreibung und den Ansprüchen, beschriebene Schwerlast-Transportfahrzeug könnte eine Nutzlast von mehreren Tonnen, beispielsweise eine Nutzlast von bis zu 50 Tonnen, insbesondere eine Nutzlast bis zu 160 Tonnen, vorzugsweise bis zu 330 Tonnen, aufweisen. Somit kann das Schwerlast-Transportfahrzeug für den Transport schwerer Transportgüter bzw. Lasten genutzt werden. Alternativ oder zusätzlich kann das im Rahmen dieser Offenbarung, insbesondere in der Beschreibung und den Ansprüchen, beschriebene Schwerlast-Transportfahrzeug dazu ausgebildet sein, mit anderen Schwerlast-Transportfahrzeugen, insbesondere hydraulisch, elektrisch und/oder mechanisch, zu einem Transportfahrzeugverband gekuppelt zu werden, so dass es sich um ein modulares Transportsystem handeln kann. Dabei kann es sich bei den gekuppelten Schwerlast-Transportfahrzeugen beispielsweise um selbstangetriebene modulare Transporter (SPMT), Industriehubtransporter (IHT) und/oder Schiffshubtransporter (SHT) handeln. Dabei müssen die Schwerlast-Transportfahrzeuge nicht zu einem physischen Gesamtfahrzeug mechanisch gekuppelt sein (sog. "fester Verband"), sondern können auch nicht mechanisch miteinander gekuppelte Transportfahrzeuge einen sog. "losen Verband" bilden. Insbesondere kann bei einem losen Verband die mechanische Verbindung der einzelnen Transportfahrzeuge, beispielsweise SPMTs, Industriehubtransporter (IHT) und/oder Schiffshubtransporter (SHT), über das Transportgut erfolgen.

Es wird darauf hingewiesen, dass das erfindungsgemäße Verfahren vorrichtungsmäßig ausgeprägte Merkmale aufweisen kann. Diese in den abhängigen Ansprüchen, in der allgemeinen Beschreibung sowie in der Figurenbeschreibung offenbarten Merkmale und die damit erzielten Vorteile können ausdrücklich Teil des erfindungsgemäßen Telematikmoduls, des erfindungsgemäßen Schwerlast-Transportfahrzeugs und/oder des erfindungsgemäßen Systems sein. Des Weiteren ist wesentlich, dass die Verfahrensansprüche, insbesondere Anspruch 1, keine explizite Reihenfolge der enthaltenen Verfahrensschritte vorgeben, so dass die Schritte des erfindungsgemäßen Verfahrens ggf. in einer anderen Reihenfolge durchgeführt werden können.

In vorteilhafter Weise können Bediendaten von dem externen Endgerät über die zweite Verbindung an das verteilte Rechnernetzwerk und von dem verteilten Rechnernetzwerk an die Fahrzeug-Anzeigeeinrichtung übertragen werden, so dass die Fahrzeug-Anzeigeeinrichtung und/oder das Schwerlast-Transportfahrzeug über das externe Endgerät bedienbar ist/sind. Dies hat den Vorteil, dass nicht nur eine Spiegelung der Anzeige ermöglicht wird, sondern zusätzlich auch eine Bedienung der Fahrzeug-Anzeigeeinrichtung bzw. des Schwerlast-Transportfahrzeugs möglich ist.

In weiter vorteilhafter Weise weist die Fahrzeug-Anzeigeeinrichtung oder das Telematikmodul ein Eingabemittel auf, wobei durch Betätigen des Eingabemittels die erste Verbindung aktiviert wird oder deaktiviert wird. Dem Bediener ist es dadurch möglich, beispielsweise durch einen einzigen Klick auf einen physischen oder virtuellen Button, eine Spiegelung der Anzeige zu ermöglichen, so dass die Handhabung erheblich vereinfacht wird.

Gemäß einer vorteilhaften Ausgestaltung umfasst die Fahrzeug-Anzeigeeinrichtung einen Fernzugriffs-Server, beispielsweise einen Virtual-Network-Computing-Server, und tunnelt der Fernzugriffs-Server die Anzeige-Datenverbindung auf zumindest eine IP-Adressen durch, insbesondere auf eine fest voreingestellte IP-Adresse. Zusätzlich könnte durch das Telematikmodul zwischen der zumindest einen IP-Adresse und dem verteilten Rechnernetzwerk die erste Verbindung erzeugt werden. Eine entsprechende Ausgestaltung hat den Vorteil, dass auf besonders einfache und sichere Weise eine Bedienung der Fahrzeug-Anzeigeeinrichtung bzw. des Schwerlast-Transportfahrzeugs möglich ist.

In weiter vorteilhafter Weise wird als erste Verbindung und/oder als zweite Verbindung eine Websocket-Verbindung bzw. ein Websocket-Tunnel genutzt. Durch die Nutzung eines Websocket-Tunnels bzw. eines Websocket-Protokolls, können auf einfache und zugleich sichere Weise die Anzeigedaten an das externe Endgerät übermittelt und von diesem weiterverarbeitet bzw. dargestellt werden. Insbesondere besteht der Vorteil, dass keine relevanten Anpassungen der IT-Struktur des Betreibers des Schwerlast-Transportfahrzeugs erfolgen muss und dass keine weitere relevante Software zu installieren ist, um das Verfahren durchzuführen. Sofern die erste Verbindung und die zweite Verbindung als Websocket-Verbindung ausgebildet sind und sofern die erste Verbindung auf einer verschlüsselten TCP-Verbindung aufbaut, besteht zwischen dem Endgerät und dem Telematikmodul eine sog. getunnelte Verbindung, die den Vorteil aufweist, dass sie auf einfache Weise hergestellt ist und eine sichere und zuverlässige Spiegelung der Anzeige des Schwerlast-Transportfahrzeugs ermöglicht.

Gemäß einer vorteilhaften Ausgestaltung können die Anzeigedaten auf dem externen Endgerät über einen Webbrowser angezeigt werden. Die Nutzung eines Webbrowsers ist besonders leicht zu realisieren, zumal entsprechende Webbrowser oftmals auf externen Endgeräten bereits vorhanden ist.

In vorteilhafter Weise wird die erste Verbindung über Mobilfunk und/oder über eine Sattelitenverbindung erzeugt. Dadurch kann die Spiegelung der Anzeige auch dann erfolgen, wenn das Schwerlast-Transportfahrzeug an nahezu beliebigen Orten im Einsatz ist, wobei lediglich eine ausreichende Mobilfunkverbindung bzw. Satellitenverbindung vorhanden sein muss.

In weiter vorteilhafter Weise wird als Fahrzeug-Datenverbindung eine kabelgebundene Verbindung, insbesondere eine Ethernet-Verbindung, genutzt. Eine kabelgebundene Verbindung hat den Vorteil, dass Daten zuverlässig und schnell übertragen werden können.

Gemäß einer vorteilhaften Ausgestaltung umfasst das Telematikmodul eine Routereinrichtung oder eine Switcheinrichtung. Mit anderen Worten kann das Telematikmodul dazu ausgebildet, die Funktion eines Routers oder eines Switches zu bereitzustellen. Eine entsprechende Ausgestaltung des Verfahrens ermöglicht es, dass durch das Telematikmodul auf einfache Weise die Datenübertragung realisiert wird. Alternativ oder zusätzlich könnten das Telematikmodul und die Fahrzeug-Anzeigeeinrichtung als gemeinsame Komponente, umfassend die Anzeige-Datenverbindung, ausgebildet sein. Auch ist es denkbar, dass das Telematikmodul und die Fahrzeug-Anzeigeeinrichtung separate Komponenten sind.

In vorteilhafter Weise ist die Fahrzeug-Anzeigeeinrichtung Teil einer Antriebseinheit. Im Konkreten könnte die Fahrzeug-Anzeigeeinrichtung Teil einer sog. Power Pack Unit (PPU) eines selbstangetriebenen modularen Transporters (SPMT) sein. Eine solche PPU kann ein Antriebsaggregat, beispielsweise einen Dieselmotor und/oder einen Elektromotor, sowie eine von diesem angetriebene Hydraulikpumpe aufweisen. Über Fluidverbindungen kann somit ein hydrostatischer Antrieb an dem/den Fahrwerk/Fahrwerken des Schwerlast-Transportfahrzeugs bzw. SPMTs betrieben werden. Alternativ oder zusätzlich ist das Telematikmodul mit einem Kabel, insbesondere einem Ethernetkabel, mit der Fahrzeug-Anzeigeeinrichtung verbunden, um eine Anzeige-Datenverbindung bereitzustellen. Eine kabelgebundene Verbindung hat den Vorteil, dass Daten zuverlässig und schnell übertragen werden können. In besonders vorteilhafter Weise weist das Kabel eine Länge im Bereich von 0.5 m bis 2 m auf.

In vorteilhafter Weise kann es sich bei den Anzeigedaten um eine Drehzahl, eine Geschwindigkeit, einen Füllstand, eine Temperatur und/oder eine Softwareversion handeln.

Es gibt nun verschiedene Möglichkeiten, die Lehre der vorliegenden Erfindung in vorteilhafter Weise auszugestalten und weiterzubilden. Dazu ist einerseits auf die den Ansprüchen 1, 9 und 12 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Systems umfassend ein erfindungsgemäßes Schwerlast-Transportfahrzeug und ein erfindungsgemäßes Telematikmodul, und
- Fig. 2: in einer schematischen Darstellung an Ablaufdiagramm eines Ausführungsbeispiels eines erfindungsgemäßen Verfahrens.

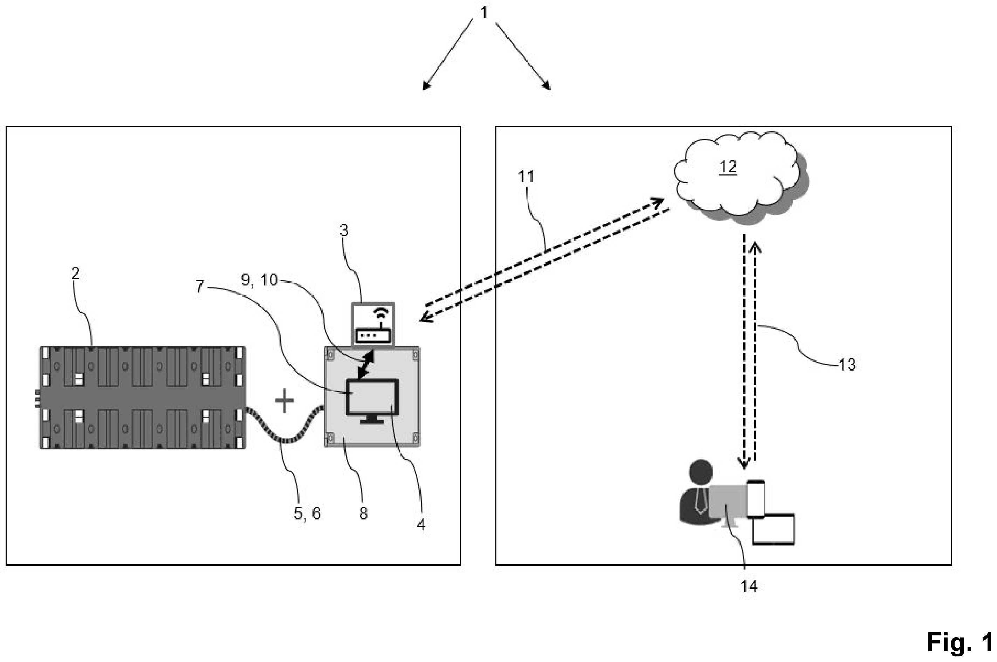

Fig. 1 zeigt einer schematischen Darstellung ein Ausführungsbeispiel eines erfindungsgemäßen Systems 1 umfassend ein erfindungsgemäßes Schwerlast-Transportfahrzeug 2 und ein erfindungsgemäßes Telematikmodul 3.

Das Schwerlast-Transportfahrzeug 2 ist in diesem Ausführungsbeispiel als selbstangetriebener, modularer Transporter (SPMT) realisiert, der mit der Fahrzeug-Anzeigeeinrichtung 4 über ein Kabel 5, beispielsweise ein Ethernetkabel, verbunden ist, um eine Fahrzeug-Datenverbindung 6 zu realisieren. Die Fahrzeug-Anzeigeeinrichtung 4 weist eine Anzeige 7, beispielsweise ein Display, auf und ist Teil einer Antriebseinheit 8 bzw. einer Power Pack Unit (PPU). Die Fahrzeug-Anzeigeeinrichtung 4 könnte mit dem Telematikmodul 3 als gemeinsames Element bzw. gemeinsame Komponente ausgebildet sein oder wie in Figur 1 dargestellt als zwei voneinander unabhängige Komponenten.

Das Telematikmodul 3 ist mit der Fahrzeug-Anzeigeeinrichtung 4 über eine Anzeige-Datenverbindung 9 gekoppelt, beispielsweise über ein Kabel 10, insbesondere ein Ethernetkabel. Das Telematikmodul 2 ist dazu ausgebildet, eine erste Verbindung 11 zu einem verteilten Rechnernetzwerk 12, insbesondere einer Cloud, bereitzustellen, so dass die Anzeigedaten der Fahrzeug-Anzeigeeinrichtung 4 über die erste Verbindung 11 an das verteilte Rechnernetzwerk 12 übermittelt werden können. Im Konkreten kann die erste Verbindung als Websocket-Verbindung ausgebildet sein, Hierzu kann beispielsweise eine Mobilfunkverbindung genutzt werden.

Des Weiteren können die Anzeigedaten über eine zweite Verbindung 13 von dem verteilten Rechnernetzwerk 12 an ein externes Endgerät 14 übermittelt und von diesem, beispielsweise in einem Webbrowser, angezeigt werden. Auch hierbei ist es denkbar und von Vorteil, eine Websocket-Verbindung als zweite Verbindung zu realisieren. Das externe Endgerät 14 könnte beispielsweise ein Desktop-Computer, ein Smartphone, ein Tablet-Computer oder ein beliebiges anderes mobiles oder stationäres Endgerät 14 sein. Aus Fig. 1 geht des Weiteren deutlich hervor, dass die erste Verbindung 11 und die zweite Verbindung 13 voneinander separat sind.

Weiterhin ist in Fig. 1 durch die jeweils parallelen, entgegengesetzten Pfeile dargestellt, dass die erste Verbindung 11 und die zweite Verbindung 13 bidirektional ausgebildet sind, so dass Bediendaten von dem externen Endgerät 14 über die zweite Verbindung 13 an das verteilte Rechnernetzwerk 12 und von dem verteilten Rechnernetzwerk 12 an die Fahrzeug-Anzeigeeinrichtung 4 übertragen werden können, um die Fahrzeug-Anzeigeeinrichtung 4 bzw. das Schwerlast-Transportfahrzeug 1 über das externe Endgerät 14 zu bedienen. Es wird ausdrücklich darauf hingewiesen, dass dies nicht zwangsweise der Fall sein muss und dass die erfindungsgemäße Lehre auch eine reine Spiegelung der Anzeige umfasst.

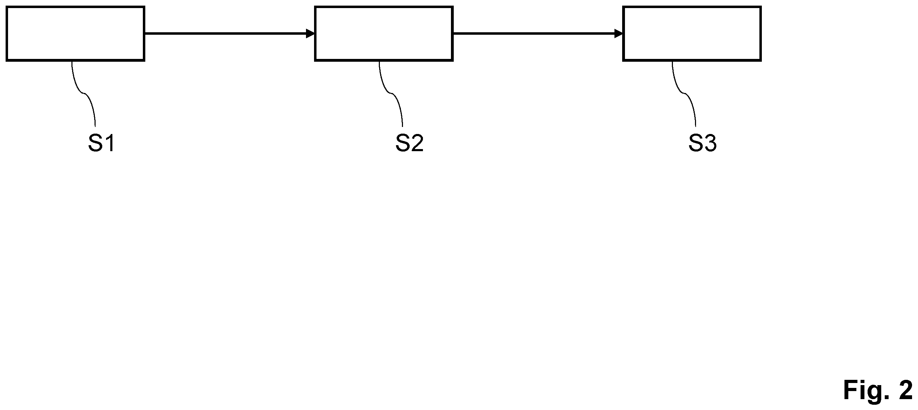

Fig. 2 zeigt ein Ablaufdiagramm eines Ausführungsbeispiel eines erfindungsgemäßen Verfahrens zur Spiegelung einer Anzeige einer Fahrzeug-Anzeigeeinrichtung eines Schwerlast-Transportfahrzeugs mit einem erfindungsgemäßen System. Das System kann beispielsweise gemäß dem in Fig. 1 gezeigten Ausführungsbeispiel ausgebildet sein, so dass hierzu auf die Beschreibung von Fig. 1 verwiesen wird.

In einem Schritt S1 wird über das Telematikmodul eine erste Verbindung zu einem verteilten Rechnernetzwerk, insbesondere einer Cloud, bereitgestellt. In einem Schritt S2 werden Anzeigedaten der Fahrzeug-Anzeigeeinrichtung über die erste Verbindung an das verteilte Rechnernetzwerk übermittelt. In einem Schritt S3 werden die Anzeigedaten über eine zweite Verbindung von dem verteilten Rechnernetzwerk an das externe Endgerät übermittelt und von diesem angezeigt.

Wesentlich ist dabei, dass die Schritte S1 bis S3 ggf. auch in einer anderen Reihenfolge durchgeführt werden können.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: System
- 2: Schwerlast-Transportfahrzeug
- 3: Telematikmodul
- 4: Fahrzeug-Anzeigeeinrichtung
- 5: Kabel
- 6: Fahrzeug-Datenverbindung
- 7: Anzeige
- 8: Antriebseinheit
- 9: Anzeige-Datenverbindung
- 10: Kabel
- 11: erste Verbindung
- 12: verteiltes Rechnernetzwerk
- 13: zweite Verbindung
- 14: externes Endgerät

## Patentansprüche

1. Verfahren zur Spiegelung einer Anzeige (7) einer Fahrzeug-Anzeigeeinrichtung (4) eines Schwerlast-Transportfahrzeugs (2), beispielsweise eines Industriehubtransporters, eines Schiffshubtransporters und/oder eines selbstangetriebenen modularen Transporters, auf ein externes Endgerät (14), beispielsweise auf ein mobiles Endgerät (14) oder auf einen Desktop-Computer,
wobei die Fahrzeug-Anzeigeeinrichtung (4) über eine Fahrzeug-Datenverbindung (6) mit dem Schwerlast-Transportfahrzeug (2) verbunden ist und über eine Anzeige-Datenverbindung (9) mit einem Telematikmodul (3) verbunden ist,
wobei über das Telematikmodul (3) eine erste Verbindung (11), vorzugsweise eine erste TCP-Verbindung, zu einem verteilten Rechnernetzwerk (12), insbesondere einer Cloud, bereitgestellt wird,
wobei Anzeigedaten der Fahrzeug-Anzeigeeinrichtung (4) über die erste Verbindung (11) an das verteilte Rechnernetzwerk (12) übermittelt werden,
wobei die Anzeigedaten über eine zweite Verbindung (13), vorzugsweise eine zweite TCP-Verbindung, von dem verteilten Rechnernetzwerk (12) an das externe Endgerät (14) übermittelt und von diesem angezeigt werden, und
wobei die erste Verbindung (11) und die zweite Verbindung (13) voneinander separat sind.

2. Verfahren nach Anspruch 1, **dadurch gekennzeichnet, dass** Bediendaten von dem externen Endgerät (14) über die zweite Verbindung (13) an das verteilte Rechnernetzwerk (12) und von dem verteilten Rechnernetzwerk (12) an die Fahrzeug-Anzeigeeinrichtung (4) übertragen werden, so dass die Fahrzeug-Anzeigeeinrichtung (4) und/oder das Schwerlast-Transportfahrzeug (1) über das externe Endgerät (14) bedienbar ist/sind.

3. Verfahren nach Anspruch 1 oder 2, **dadurch gekennzeichnet, dass** die Fahrzeug-Anzeigeeinrichtung (4) oder das Telematikmodul (3) ein Eingabemittel aufweist, wobei durch Betätigen des Eingabemittels die erste Verbindung (11) aktiviert wird oder deaktiviert wird, vorzugsweise, wobei die Spiegelung der Anzeige (7) durch wenige, insbesondere eine einzige oder zwei, Betätigungen des Eingabemittels aktiviert oder deaktiviert wird.

4. Verfahren nach einem der Ansprüche 1 bis 3, **dadurch gekennzeichnet, dass** die Fahrzeug-Anzeigeeinrichtung (4) einen Fernzugriffs-Server, beispielsweise einen Virtual-Network-Computing-Server, umfasst, und dass der Fernzugriffs-Server die Anzeige-Datenverbindung (9) auf zumindest eine IP-Adressen durchtunnelt, insbesondere auf eine fest voreingestellte IP-Adresse.

5. Verfahren nach Anspruch 4, **dadurch gekennzeichnet, dass** durch das Telematikmodul (3) zwischen der zumindest einen IP-Adresse und dem verteilten Rechnernetzwerk (12) die erste Verbindung erzeugt wird.

6. Verfahren nach einem der Ansprüche 1 bis 5, **dadurch gekennzeichnet, dass** als erste Verbindung (11) und/oder als zweite Verbindung (13) eine Websocket-Verbindung genutzt wird.

7. Verfahren nach einem der Ansprüche 1 bis 6, **dadurch gekennzeichnet, dass** die Anzeigedaten auf dem externen Endgerät (14) über einen Webbrowser angezeigt werden.

8. Verfahren nach einem der Ansprüche 1 bis 7, **dadurch gekennzeichnet, dass** die erste Verbindung (11) über Mobilfunk und/oder über eine Satellitenverbindung erzeugt wird.

9. Verfahren nach einem der Ansprüche 1 bis 8, **dadurch gekennzeichnet, dass** als Fahrzeug-Datenverbindung (6) eine kabelgebundene Verbindung, insbesondere eine Ethernet-Verbindung, genutzt wird.

10. Telematikmodul (3) für ein Schwerlast-Transportfahrzeug (2), insbesondere zur Durchführung eines Verfahrens nach einem der Ansprüche 1 bis 9, wobei das Telematikmodul (3) über eine Anzeige-Datenverbindung (9) mit einer Fahrzeug-Anzeigeeinrichtung (4) verbindbar ist und dazu ausgebildet ist, eine erste Verbindung (11), vorzugsweise eine erste TCP-Verbindung, zu einem verteilten Rechnernetzwerk (12) bereitzustellen und Anzeigedaten der Fahrzeug-Anzeigeeinrichtung (4) an das verteilte Rechnernetzwerk (12) zu übermitteln.

11. Telematikmodul (3) nach Anspruch 10, **dadurch gekennzeichnet, dass** das Telematikmodul (3) eine Routereinrichtung oder eine Switcheinrichtung umfasst.

12. Schwerlast-Transportfahrzeug (2), insbesondere zur Durchführung eines Verfahrens nach einem der Ansprüche 1 bis 9, mit einer Fahrzeug-Anzeigeeinrichtung (4) und einem Telematikmodul (3) nach einem der Ansprüche 10 oder 11.

13. Schwerlast-Transportfahrzeug (2) nach Anspruch 12, **dadurch gekennzeichnet, dass** die Fahrzeug-Anzeigeeinrichtung (4) Teil einer Antriebseinheit (8) ist, und/oder
dass das Telematikmodul (3) mit einem Kabel, insbesondere einem Ethernetkabel, mit der Fahrzeug-Anzeigeeinrichtung (4) verbunden ist, um eine Anzeige-Datenverbindung (9) bereitzustellen.

14. Schwerlast-Transportfahrzeug (2) nach Anspruch 13, **dadurch gekennzeichnet, dass** das Kabel eine Länge im Bereich von 0.5 m bis 2m, insbesondere 1.2 m bis 1, 7m aufweist.

15. System (1) mit einem Schwerlast-Transportfahrzeug (2) nach einem der Ansprüche 12 bis 14 und einem externen Endgerät (14), wobei das System zur Ausführung eines Verfahrens nach einem der Ansprüche 1 bis 9 ausgebildet ist.
